# FASCICULE DE BREVET EUROPEEN

(11) **EP 1 504 705 B1**
(45) Date de publication et mention de la délivrance du brevet: **27.06.2007**
(21) Numéro de dépôt: 04356134.9
(22) Date de dépôt: 22.07.2004
(51) Int. Cl.: A47J 37/12

(54) **Appareil électrique de cuisson comportant un socle de vidange**
Elektrisches Kochgerät mit einem Entleerungssockel
Electrical cooking appliance containing a drain base

(30) Priorité: 05.08.2003 FR 0309653
(43) Date de publication de la demande: 09.02.2005
(73) Titulaire: SEB S.A., 69130 Ecully (FR)
(72) Inventeur: Pretre, Nicolas, 21000 Dijon (FR); Payen, Jean-Marc, 21800 Quetigny (FR)
(74) Mandataire: Kiehl, Hubert

(56) Documents cités:
- FR-A- 2 810 868
- FR-A- 2 830 737
- NL-C- 1 014 947
- US-A1- 2003 070 557

## Description

La présente invention concerne la domaine technique des appareils électriques de cuisson comprenant une cuve prévue pour contenir un bain de cuisson. La présente invention concerne notamment, mais non exclusivement les friteuses.

Il est connu du document FR 2 830 734 une friteuse électrique comportant une cuve munie d'un dispositif de vidange prévu pour un déversement du contenu de la cuve dans un réceptacle de vidange. Le réceptacle de vidange peut former un socle recevant de manière amovible le boîtier entourant la cuve. Toutefois le dispositif de vidange est associé à un bouton de manoeuvre susceptible d'entraîner un clapet appartenant au dispositif de vidange par l'intermédiaire d'un mécanisme de commande monté sur le réceptacle de vidange. Une telle construction est d'une part compliquée à réaliser, et d'autre part contraignante à utiliser.

L'objet de la présente invention est de proposer un appareil électrique de cuisson dans lequel la vidange de la cuve est simplifiée.

Un autre objet de la présente invention est de proposer un appareil électrique de cuisson du type précité, dont la construction soit plus économique.

Un autre objet de la présente invention est de proposer un appareil électrique de cuisson du type précité, dont l'utilisation soit sûre.

Ces objets sont atteints avec un appareil électrique de cuisson, notamment friteuse électrique, comprenant un boîtier, un socle de vidange dans lequel est ménagé un receptacle de vidange, le boîtier étant susceptible d'être mis en place sur le socle de vidange, et dans le boîtier une cuve prévue pour recevoir un bain de cuisson, la cuve étant munie d'un dispositif de vidange prévu pour un déversement du bain de cuisson dans le réceptacle de vidange, le dispositif de vidange comprenant un clapet à ressort susceptible d'occuper une position de rappel stable fermée et une position ouverte, le socle de vidange comportant une zone d'appui prévue pour recevoir le boîtier, le socle de vidange comportant un organe de commande prévu pour amener le clapet à ressort en position ouverte lorsque le boîtier est en place sur le socle de vidange, le réceptacle de vidange comportant un fond et une ouverture supérieure s'étendant au dessus dudit fond, du fait que le remplissage du réceptacle de vidange s'effectue par l'ouverture supérieure et que la zone d'appui est disposée autour de l'organe de commande. Cette disposition simplifie le remplissage du réceptacle de vidange. Ainsi la simple mise en place du boîtier sur le socle de vidange permet de configurer l'appareil pour le transfert du bain de cuisson de la cuve dans le réceptacle de vidange. La construction et l'utilisation de l'appareil sont simplifiées.

Avantageusement, le clapet à ressort comporte une pièce mobile d'obturation montée mobile contre un ressort de rappel entre une position fermée et une position ouverte, et l'organe de commande est prévu pour déplacer la pièce mobile d'obturation en position ouverte lorsque le boîtier est en place sur le socle de vidange. En alternative, l'organe de commande ne déplace pas nécessairement directement la pièce mobile de rappel, mais peut agir sur une pièce de transmission ou sur un mécanisme de transmission appartenant au dispositif de vidange et coopérant avec la pièce mobile de rappel.

Avantageusement alors l'ouverture supérieure est délimitée par la paroi latérale du réceptacle de vidange. Cette disposition permet de simplifier la construction du socle de vidange. Cette disposition permet aussi de faciliter le remplissage du réceptacle de vidange. Cette disposition permet aussi de laisser figer dans le réceptacle de vidange la matière grasse utilisée pour la cuisson.

Avantageusement, l'organe de commande est agencé au dessus du réceptacle de vidange. En alternative l'organe de commande peut être agencé au dessus d'une goulotte débouchant dans le réceptacle de vidange.

Selon un mode de réalisation avantageux, l'organe de commande est ménagé sur un support issu du fond du réceptacle de vidange. Cette disposition permet de faciliter le démoulage de la matière grasse ayant figé dans le réceptacle de vidange. Le dispositif de vidange peut être avantageusement agencé en position centrale sous le fond de la cuve.

Avantageusement, pour une meilleure conservation de l'huile ou de la matière grasse, le réceptacle de vidange est susceptible d'être fermé par un couvercle.

Avantageusement, le dispositif de vidange comporte un filtre entre la cuve et le clapet à ressort. Cette disposition permet de débarrasser le bain de cuisson des particules susceptibles d'entraver le bon fonctionnement du clapet à ressort. Cette disposition permet également une meilleure conservation de l'huile ou de la matière grasse recueillie dans le réceptacle de vidange.

Avantageusement, le dispositif de vidange comporte un clapet thermostatique entre la cuve et le clapet à ressort. Cette disposition permet la mise en place du boîtier sur le socle de vidange sans risque d'écoulement du bain de cuisson contenu dans la cuve lorsque ledit bain de cuisson est encore trop chaud.

Avantageusement, pour une meilleure ergonomie, la pièce mobile d'obturation est mobile selon la direction de mise en place du boîtier sur le socle de vidange.

Avantageusement, la zone d'appui est surmontée d'une paroi annulaire supérieure. Cette disposition permet d'agencer l'organe de commande plus bas que le bord supérieur de la paroi annulaire supérieure, afin de simplifier la réalisation du couvercle du socle de vidange et d'agencer le dispositif de vidange au dessus des moyens d'appui du boîtier.

Avantageusement, le réceptacle de vidange comporte une fenêtre latérale de visualisation.

Avantageusement encore, pour faciliter l'utilisation de l'appareil, le boîtier comporte une poignée. Si désiré, le boîtier peut alors comporter une autre poignée, de préférence opposée à la première poignée.

Selon un mode de réalisation, le boîtier est susceptible d'être mis en place sur un socle d'alimentation électrique. D'autres modes de réalisation sont envisageables, notamment un boîtier comprenant une cuve et une alimentation électrique, ou encore une alimentation électrique indépendante du boîtier, associée à une résistance prévue pour être plongée dans la cuve.

L'invention sera mieux comprise à l'étude d'un exemple de réalisation, pris à titre nullement limitatif, illustré dans les figures 1 à 5 annexées, dans lesquelles :
- la figure 1 est une vue en perspective et en éclaté d'un appareil électrique de cuisson selon l'invention, comprenant un boîtier avec une cuve, un socle de vidange et un couvercle,
- la figure 2 est une vue en coupe transversale du boîtier de l'appareil électrique de cuisson montré à la figure 1, monté sur le socle de vidange,
- la figure 3 est une vue en coupe transversale du socle de vidange de l'appareil électrique de cuisson montré à la figure 1, fermé par le couvercle,
- la figure 4 est une vue en coupe transversale du dispositif de vidange de la cuve de l'appareil illustré à la figure 1, représenté en position de cuisson,
- la figure 5 est une vue en coupe transversale du dispositif de vidange de la cuve de l'appareil illustré à la figure 1, représenté en position de vidange.

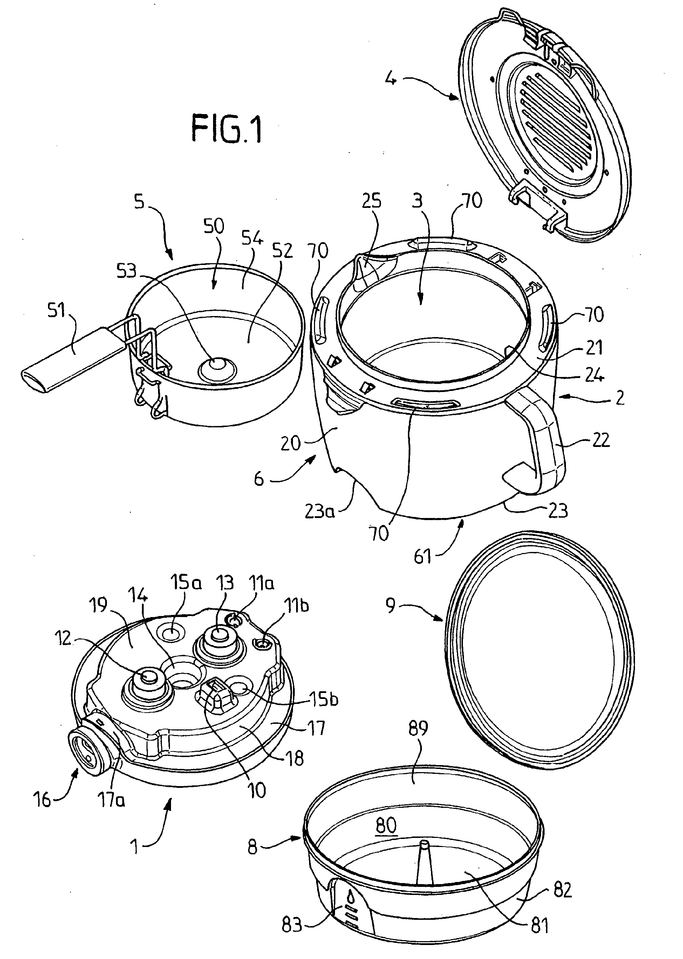

La figure 1 montre un appareil électrique de cuisson selon l'invention, tel qu'une friteuse électrique, comprenant un socle d'alimentation électrique 1, un boîtier 2 monté amovible sur le socle d'alimentation électrique 1, une cuve 3 agencée dans le boîtier 2, un couvercle 4 prévu pour fermer la cuve 3, un panier de cuisson 5 prévu pour être disposé dans la cuve 3, un socle de vidange 8 et un couvercle 9 associé au socle de vidange 8. Le boîtier 2 et la cuve 3 forment un sous-ensemble de cuisson 6 susceptible d'être mis en place sur le socle d'alimentation électrique 1 ou sur le socle de vidange 8.

Le socle d'alimentation électrique 1 comporte une face supérieure présentant un connecteur de terre 10 prévu pour être relié à la cuve 3, deux connecteurs électriques 11 a, 11 b prévus pour alimenter des moyens de chauffe associés à la cuve 3, un premier palpeur 12 associé à un fusible thermique, un deuxième palpeur 13 associé à une sonde de température, une dépression 14 agencée de manière centrale, et deux passages 15a, 15b permettant notamment une circulation d'air entre la face inférieure et la face supérieure du socle d'alimentation électrique 1.

Un bouton de commande 16 permet de régler la température de consigne de la régulation associée à la sonde de température. Le bouton de commande 16 est agencé sur une face latérale du socle d'alimentation électrique 1. La face supérieure du socle d'alimentation électrique 1 présente une zone d'appui 17 prévue pour recevoir le boîtier 2. La zone d'appui 17 est annulaire. La zone d'appui 17 présente un bossage 17a au niveau du bouton de commande 16. La zone d'appui 17 entoure une paroi latérale intérieure 18.

Le connecteur de terre 10, les connecteurs électriques 11a, 11b, le premier palpeur 12, le deuxième palpeur 13, la dépression 14, et les deux passages 15a, 15b sont ainsi agencés dans une partie centrale surélevée 19 du socle d'alimentation électrique 1. La paroi latérale intérieure 18 forme un moyen de centrage du boîtier 2 sur le socle d'alimentation électrique 1.

Le boîtier 2 comporte une paroi latérale extérieure 20 prolongée par une partie supérieure annulaire 21. La partie supérieure annulaire 21 s'étend vers l'intérieur du boîtier 2. Le boîtier 2 comporte une poignée 22. La poignée 22 est issue de la paroi latérale extérieure 20.

Le boîtier 2 est susceptible d'être mis en place sur le socle d'alimentation électrique 1 pour réaliser une opération de cuisson. Le boîtier 2 comporte des moyens d'appui 61 susceptibles de reposer sur le socle d'alimentation électrique 1, ou sur un autre support, notamment sur un support plan. Les moyens d'appui 61 sont formés par un bord inférieur 23 de la paroi latérale extérieure 20. Le bord inférieur 23 est prévu pour reposer sur la zone d'appui 17. Le bord inférieur 23 présente une découpe 23a prévue pour être disposée sur le bossage 17a. La découpe 23a et le bossage 17a permettent d'indiquer le positionnement du boîtier 2 sur le socle d'alimentation électrique 1.

La partie supérieure annulaire 21 du boîtier 2 entoure une paroi annulaire intérieure 24. Le boîtier 2 comporte un bec verseur 25. Le bec verseur 25 est ménagé dans la paroi annulaire intérieure 24.

Des ouies 70 sont ménagées sur la partie annulaire supérieure 21. Les ouies 70 présentent chacune une ouverture latérale orientée vers la périphérie du boîtier 2. Les ouies 70 sont prévues pour mettre en communication avec l'extérieur l'espace annulaire situé entre la cuve 3 et la paroi latérale extérieure 20 du boîtier 2. Les ouies 70 permettent l'évacuation de l'eau lorsque le boîtier 2 et la cuve 3 sont disposés retournés dans un lave-vaisselle.

Le couvercle 4 est monté amovible sur le boîtier 2.

Le panier de cuisson 5 comporte un tamis 50 réalisé par exemple en grille métallique, et une poignée 51. Le tamis 50 présente un fond 52 ayant une protubérance 53, et des parois latérales 54.

Un réceptacle de vidange 80 est ménagé dans le socle de vidange 8. Le réceptacle de vidange 80 comporte un fond 81 et une paroi latérale 82. Le fond 81 peut comporter des raidisseurs (non visibles aux figures), pour éviter les déformations liées à la dilatation thermique lors du remplissage du réceptacle de vidange 80. Une fenêtre latérale de visualisation 83 est ménagée sur la paroi latérale 82. A cet effet le réceptacle de vidange 80 est de préférence réalisé en matériau transparent ou translucide pour permettre à l'utilisateur de contrôler le contenu présent dans le réceptacle de vidange 80. Le réceptacle de vidange 80 comporte une ouverture supérieure 89. L'ouverture supérieure 89 est délimitée par la paroi latérale 82.

Le couvercle 9 permet de fermer le réceptacle de vidange 80, de préférence de manière hermétique, pour une meilleure conservation de l'huile ou de la matière grasse utilisée pour le bain de cuisson.

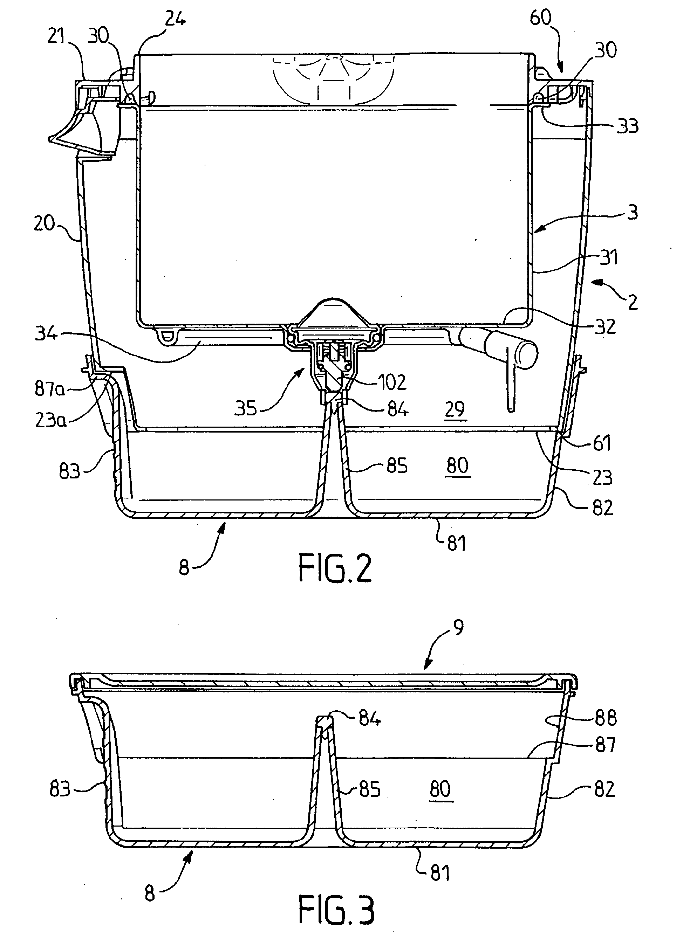

La cuve 3 est prévue pour recevoir un bain de cuisson. Tel que montré à la figure 2, le boîtier 2 est susceptible d'être mis en place sur le socle de vidange 8 pour transférer le bain de cuisson dans le réceptacle de vidange 80.

La cuve 3 présente une paroi latérale 31 et un fond 32. La paroi latérale 31 est prolongée par la paroi annulaire intérieure 24. La paroi latérale 31 comporte un bord supérieur 33. Le bord supérieur 33 est formé par une collerette périphérique s'étendant vers l'extérieur. La cuve 3 est assemblée avec la partie supérieure annulaire 21 du boîtier 2, par exemple par vissage. Un joint 30 est intercalé entre la partie supérieure annulaire 21 et le bord supérieur 33. Le bord supérieur 33 est fixé à la partie supérieure annulaire 21. La paroi latérale 31 de la cuve 3 s'étend à distance de la paroi latérale extérieure 20 du boîtier 2.

Des moyens de chauffe 34 sont solidaires de la cuve 3, pour obtenir un bon échange thermique. Les moyens de chauffe 34 sont par exemple soudés ou brasés sous le fond 32 de la cuve 3. Les moyens de chauffe 34 sont reliés électriquement au socle d'alimentation électrique 1 lorsque le boîtier 2 repose sur le socle d'alimentation électrique 1. Les moyens de chauffe 34 sont avantageusement formés par au moins un élément chauffant étanche susceptible d'être aspergé et/ou immergé dans l'eau.

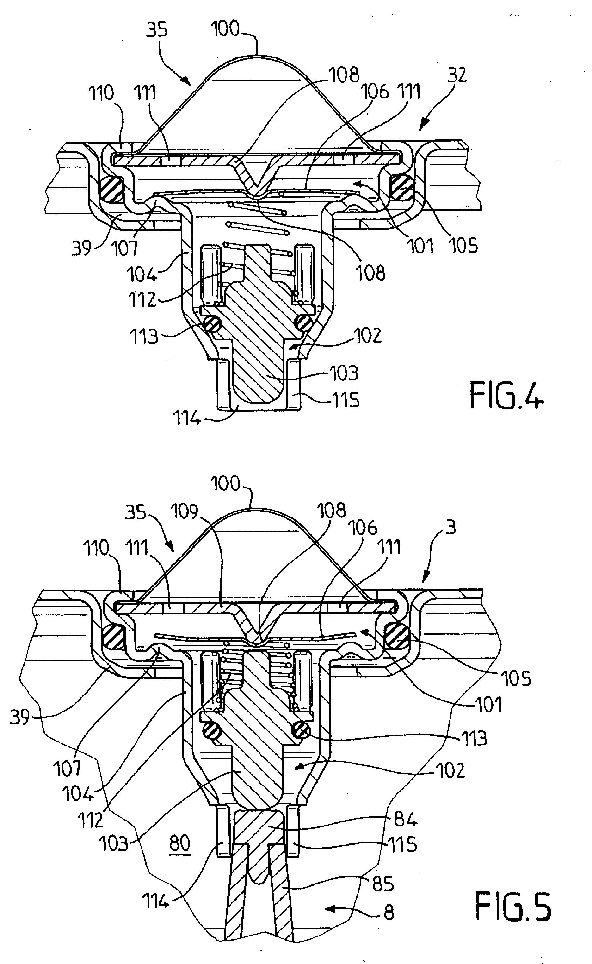

La cuve 3 est munie d'un dispositif de vidange 35, mieux visible aux figures 4 et 5. Le dispositif de vidange 35 est prévu pour le déversement du bain de cuisson dans le réceptacle de vidange 80. Le dispositif de vidange 35 est agencé sous le fond 32 de la cuve 3. Le bord inférieur 23 du boîtier 2 s'étend plus bas que le dispositif de vidange 35. De ce fait le dispositif de vidange 35 s'étend au dessus du plan d'appui du boîtier 2 défini par les moyens d'appui 61. Le dispositif de vidange 35 est logé dans la dépression 14 lorsque le boîtier 2 est en place sur le socle d'alimentation électrique 1. La protubérance 53 vient sur le dispositif de vidange 35 lorsque le panier 5 est en place dans la cuve 3.

La partie supérieure annulaire 21 du boîtier 2 relie la cuve 3 à la paroi latérale extérieure 20. La partie supérieure annulaire 21 et la paroi annulaire intérieure 24 appartiennent à une bague 60. La bague 60 est par exemple réalisée en matière plastique résistant aux températures élevées du bord supérieur 33 de la cuve 3, ces températures pouvant atteindre 180°C lorsque la cuve 3 est réalisée en aluminium. La bague 60 peut notamment être réalisée en PBT. La bague 60 est assemblée avec la paroi latérale extérieure 20, par exemple par vissage.

La paroi latérale extérieure 20 du boîtier 2 ménage une ouverture inférieure 29. Le fond 32 de la cuve 3 est ainsi accessible lorsque le boîtier 2 est retiré du socle d'alimentation électrique 1. La paroi latérale extérieure 20 peut être réalisée en matière plastique, notamment en polypropylène. La paroi latérale extérieure 20 enveloppe latéralement la cuve 3 et les moyens de chauffe 34.

Le socle de vidange 8 comporte un organe de commande 84 prévu pour actionner le dispositif de vidange 35. L'organe de commande 84 est agencé au dessus du réceptacle de vidange 80. L'organe de commande 84 est ménagé sur un support 85 issu du fond 81 du réceptacle de vidange 80. Le socle de vidange 8 comporte une zone d'appui 87 prévue pour recevoir le boîtier 2. La zone d'appui 87 est annulaire. La zone d'appui 87 comporte un bossage 87a prévu pour recevoir la découpe 23a. Le bossage 87a est ménagé au niveau de la fenêtre de visualisation 83.

Tel que mieux visible à la figure 3, la zone d'appui 87 est ménagée sur la face intérieure de la paroi latérale 82. De préférence le volume du réceptacle de vidange 80 disposé sous la zone d'appui 87 est suffisant pour recueillir le bain de cuisson contenu dans la cuve 3. La zone d'appui 87 est surmontée d'une paroi annulaire supérieure 88. La paroi annulaire supérieure 88 forme un moyen de centrage du boîtier 2 sur le socle de vidange 8.

Le support 85, l'organe de commande 84 ainsi que la paroi latérale 82 du réceptacle de vidange 80 présentent une forme tronconique permettant le démoulage après solidification de la matière grasse recueillie dans le réceptacle de vidange 80.

Tel que montré aux figures 4 et 5, le dispositif de vidange 35 comprend un filtre 100, un clapet thermostatique 101 et un clapet à ressort 102 comportant une pièce mobile d'obturation 103.

La cuve 3 présente une cavité ouverte 39. La cavité ouverte 39 est ménagée dans le fond 32 de la cuve 3. Le dispositif de vidange 35 comporte un corps tubulaire 104. Le corps tubulaire 104 est monté dans la cavité ouverte 39. Un joint annulaire 105 disposé dans la cavité ouverte 39 autour du corps tubulaire 104 assure une étanchéité entre le corps tubulaire 104 et la cuve 3.

Le clapet thermostatique 101 est agencé entre la cuve 3 et le clapet à ressort 102. Le clapet thermostatique 101 comporte une coupelle bimétallique 106 prévue pour venir en appui sur un épaulement annulaire 107 du corps tubulaire 104, lorsque le clapet thermostatique 101 est en position fermée, tel que représenté à la figure 4. La coupelle bimétallique 106 présente une cavité centrale 108 maintenue par une pièce 109 solidaire du corps tubulaire 104. A cet effet, le corps tubulaire 104 présente un bord supérieur 110 replié vers l'intérieur. La pièce 109 présente deux ouvertures 111 pour le passage du bain de cuisson.

Le filtre 100 est agencé entre la cuve 3 et le clapet à ressort 102. Le filtre 100 est agencé à l'entrée du dispositif de vidange 35, avant le clapet thermostatique 101. Le filtre 100 est monté au dessus de la pièce 109 sous le bord supérieur 110. Le filtre 100 forme un dôme de manière à éviter l'accumulation des débris contenus dans le bain de cuisson. Le filtre 100 est agencé dans l'entrée supérieure du corps tubulaire 104.

Le clapet à ressort 102 est susceptible d'occuper une position de rappel stable fermée, illustrée à la figure 4, et une position ouverte, illustrée à la figure 5. Le clapet à ressort 102 est agencé à la sortie du dispositif de vidange 35, après le clapet thermostatique 101. L'organe de commande 84 est prévu pour amener le clapet à ressort 102 en position ouverte lorsque le boîtier 2 est en place sur le socle de vidange 8.

La pièce mobile d'obturation 103 est montée mobile contre un ressort de rappel 112 entre une position fermée illustrée à la figure 4 et une position ouverte illustrée à la figure 5. Le ressort de rappel 112 prend appui autour de la cavité centrale 108 de la coupelle bimétallique 106. La pièce mobile d'obturation 103 porte un joint annulaire 113 prévu pour venir en appui contre le corps tubulaire 104 lorsque le clapet à ressort 102 est en position fermée, tel que représenté à la figure 4. La position fermée du clapet à ressort 102 correspond à une position de rappel stable. La pièce mobile d'obturation 103 est mobile selon la direction de mise en place du boîtier 2 sur le socle de vidange 8. L'organe de commande 84 est prévu pour déplacer la pièce mobile d'obturation 103 en position ouverte lorsque le boîtier 2 est en place sur le socle de vidange 8.

Le corps tubulaire 104 présente une sortie inférieure 114 munie de découpes latérales 115, pour concilier le maintien latéral de l'organe de commande 84 et l'écoulement du bain de cuisson. La sortie inférieure 114 du corps tubulaire 104 est agencée en regard de l'ouverture inférieure 29 du boîtier 2.

La figure 5 montre le clapet thermostatique 101 et le clapet à ressort 102 en position ouverte. Lorsque le bain de cuisson contenu dans la cuve 3 a suffisamment refroidi et présente une température inférieure à la température de transition de la coupelle bimétallique 106, la coupelle bimétallique 106 se retourne et s'écarte de l'épaulement 107. Lorsque le boîtier 2 contenant la cuve 3 est placé sur le socle de vidange 8, l'organe de commande 84 repousse la pièce mobile d'obturation 103 contre le ressort de rappel 112. De préférence, la raideur du ressort de rappel 112 est choisie de manière à permettre l'ouverture du clapet à ressort 102 sous l'effet du seul poids du boîtier 2 et de la cuve 3. Le joint annulaire 113 est écarté du corps tubulaire 104. Un passage est ainsi ménagé entre l'entrée supérieure et la sortie inférieure 114 du corps tubulaire 104.

L'organe de commande 84 susceptible de coopérer avec le dispositif de vidange 35 est de préférence réalisé en une matière résistant à la température du contenu de la cuve 3, la chaleur étant transmise par le corps tubulaire 104 et par la pièce mobile d'obturation 103.

L'appareil selon l'invention fonctionne et s'utilise de la manière suivante.

Après avoir effectué une cuisson, l'utilisateur retire le boîtier 2 du socle d'alimentation électrique 1 et pose le boîtier 2 sur le socle de vidange 8 dépourvu du couvercle 9, tel que représenté à la figure 2.

L'organe de commande 84 repousse la pièce mobile d'obturation 103, tel que représenté à la figure 5. Le clapet à ressort 102 est alors en position ouverte.

Toutefois, le bain de cuisson contenu de la cuve 3 ne peut s'écouler dans le réceptacle 80 que lorsque la température du bain de cuisson et de la cuve 3 a suffisamment décru pour permettre à la coupelle bimétallique 106 de s'écarter de l'épaulement 107. Le clapet thermostatique 101 est alors en position ouverte. Le bain de cuisson contenu de la cuve 3 peut s'écouler par le filtre 100, puis par les ouvertures 111 de la pièce 109, passer entre la coupelle bimétallique 106 et le corps tubulaire 104, puis passer entre la pièce d'obturation 103 et le corps tubulaire 104, pour s'échapper par la sortie inférieure 114 et être recueilli dans le réceptacle de vidange 80.

L'utilisateur peut ensuite retirer le boîtier 2 du socle de vidange 8 et fermer le réceptacle de vidange 80 avec le couvercle 9, pour conserver l'huile ou la matière grasse filtrée jusqu'à la prochaine utilisation. Le couvercle 9 peut recevoir le socle d'alimentation électrique 1. Ainsi le socle de vidange 8, le couvercle 9, le socle d'alimentation électrique 1 et le sous ensemble de cuisson 6 formé par le boîtier 2 et la cuve 3 peuvent être rangés de manière superposée.

A titre de variante, le dispositif de vidange 35 et l'organe de commande 84 ne sont pas nécessairement agencés en position centrale.

A titre de variante, l'organe de commande 84 et le réceptacle de vidange 80 peuvent être réalisés dans une même pièce résistant à la température du contenu de la cuve 3.

A titre de variante, l'organe de commande 84 n'est pas nécessairement issu du réceptacle de vidange 80, mais peut notamment être agencé sur le socle de vidange 8 à l'extérieur du réceptacle de vidange 80.

A titre de variante, la zone d'appui 87 du socle de vidange 8 peut être dépourvue de bossage pour permettre un positionnement du boîtier 2 sans indexage sur le socle de vidange 8, le dispositif de vidange 35 et l'organe de commande 84 étant alors agencés en position centrale.

A titre de variante, l'organe de commande 84 peut actionner la pièce mobile d'obturation par l'intermédiaire d'un mécanisme de commande appartenant au dispositif de vidange 35.

A titre de variante, le boîtier 2 pourrait comporter une alimentation électrique pour les moyens de chauffe 34. L'appareil peut alors être dépourvu de socle d'alimentation électrique 1.

A titre de variante, les moyens de chauffe 34 ne sont pas nécessairement agencés sous la cuve 3. Les moyens de chauffe 34 pourraient notamment être agencés dans la cuve 3, si désiré de manière amovible. L'alimentation électrique des moyens de chauffe peut alors être indépendante du boîtier 2. L'appareil peut également être dépourvu de socle d'alimentation électrique 1.

A titre de variante, le boîtier 2 peut comporter deux poignées, par exemple deux poignées opposées. Une telle disposition est particulièrement intéressante pour les appareils de capacité importante.

A titre de variante complémentaire, le boîtier 2 ne comporte pas nécessairement quatre ouies 70. Le boîtier 2 peut être dépourvu d'ouies. La ou les ouies 70 peuvent être dépourvues de paroi supérieure et former une ouverture sur la partie supérieure annulaire 21. La ou les ouies ne sont pas nécessairement ménagées sur la partie supérieure annulaire 21, mais peuvent notamment être agencées sur la paroi latérale extérieure 20, ou encore entre la partie supérieure annulaire 21 et la paroi latérale extérieure 20, voire dans le bord extérieur de la cuve 3, ou entre la partie supérieure annulaire 21 et le bord extérieur de la cuve 3.

La présente invention n'est nullement limitée à l'exemple de réalisation décrit et à ses variantes, mais englobe de nombreuses modifications dans le cadre des revendications.

## Revendications

1. Appareil électrique de cuisson, notamment friteuse électrique, comprenant un boîtier (2), un socle de vidange (8) dans lequel est ménagé un receptacle de vidange (80), le boîtier (2) étant susceptible d'être mis en place sur le socle de vidange (8), et dans le boîtier (2) une cuve (3) prévue pour recevoir un bain de cuisson, la cuve (3) étant munie d'un dispositif de vidange (35) prévu pour un déversement du bain de cuisson dans le réceptacle de vidange (80), le dispositif de vidange (35) comprenant un clapet à ressort (102) susceptible d'occuper une position de rappel stable fermée et une position ouverte, le socle de vidange (8) comportant une zone d'appui (87) prévue pour recevoir le boîtier (2), le socle de vidange (8) comportant un organe de commande (84) prévu pour amener le clapet à ressort (102) en position ouverte lorsque le boîtier (2) est en place sur le socle de vidange (8), le réceptacle de vidange (80) comportant un fond (81) et une ouverture supérieure (89) s'étendant au dessus dudit fond (81), **caractérisé en ce que** le remplissage du réceptacle de vidange (80) s'effectue par l'ouverture supérieure (89) et **en ce que** la zone d'appui (87) est disposée autour de l'organe de commande (84).

2. Appareil électrique de cuisson selon la revendication 1, **caractérisé en ce que** le dispositif de vidange (35) est agencé en face de l'ouverture supérieure (89) lorsque le boîtier (2) est en place sur le socle de vidange (8).

3. Appareil électrique de cuisson selon l'une des revendications 1 ou 2, **caractérisé en ce que** le clapet à ressort (102) comporte une pièce mobile d'obturation (103) montée mobile contre un ressort de rappel (112) entre une position fermée et une position ouverte et **en ce que** l'organe de commande (84) est prévu pour déplacer la pièce mobile d'obturation (103) en position ouverte lorsque le boîtier (2) est en place sur le socle de vidange (8).

4. Appareil électrique de cuisson selon l'une des revendications 1 à 3, **caractérisé en ce que** l'ouverture supérieure (89) est délimitée par la paroi latérale (82) du réceptacle de vidange (80).

5. Appareil électrique de cuisson selon l'une des revendications 1 à 4, **caractérisé en ce que** l'organe de commande (84) est agencé au dessus du réceptacle de vidange (80).

6. Appareil électrique de cuisson selon l'une des revendications 1 à 5, **caractérisé en ce que** l'organe de commande (84) est ménagé sur un support (85) issu du fond (81) du réceptacle de vidange (80).

7. Appareil électrique de cuisson selon la revendication 6, **caractérisé en ce que** le support (85), l'organe de commande (84) et la paroi latérale (82) du réceptacle de vidange (80) présentent une forme tronconique.

8. Appareil électrique de cuisson selon l'une des revendications 1 à 7, **caractérisé en ce que** le réceptacle de vidange (80) est susceptible d'être fermé par un couvercle (9).

9. Appareil électrique de cuisson selon l'une des revendications 1 à 8, **caractérisé en ce que** le dispositif de vidange (35) comporte un filtre (100) entre la cuve (3) et le clapet à ressort (102).

10. Appareil électrique de cuisson selon l'une des revendications 1 à 9, **caractérisé en ce que** le dispositif de vidange (35) comporte un clapet thermostatique (101) entre la cuve (3) et le clapet à ressort (102).

11. Appareil électrique de cuisson selon l'une des revendications 3 à 10, **caractérisé en ce que** la pièce mobile d'obturation (103) est mobile selon la direction de mise en place du boîtier (3) sur le socle de vidange (8).

12. Appareil électrique de cuisson selon l'une des revendications 1 à 11, **caractérisé en ce que** la zone d'appui (87) est surmontée d'une paroi annulaire supérieure (88).

13. Appareil électrique de cuisson selon la revendication 12, **caractérisé en ce que** la zone d'appui (87) est entourée par la paroi annulaire supérieure (88).

14. Appareil électrique de cuisson selon l'une des revendications 12 ou 13, **caractérisé en ce que** la paroi annulaire supérieure (88) forme un moyen de centrage du boîtier (2) sur le socle de vidange (0).

15. Appareil électrique de cuisson selon l'une des revendications 12 à 14, **caractérisé en ce que** l'organe de commande (84) est agencé plus bas que le bord supérieur de la paroi annulaire supérieure (88).

16. Appareil électrique de cuisson selon l'une des revendications 12 à 15, **caractérisé en ce que** la paroi annulaire supérieure (88) entoure l'ouverture supérieure (89).

17. Appareil électrique de cuisson selon l'une des revendications 1 à 16, **caractérisé en ce que** le réceptacle de vidange (80) comporte une fenêtre latérale de visualisation (83).

18. Appareil électrique de cuisson selon l'une des revendications 1 à 17, **caractérisé en ce que** le boîtier (2) comporte une poignée (22).

19. Appareil électrique de cuisson selon l'une des revendications 1 à 18. **caractérisé en ce que** le boîtier (2) est susceptible d'être mis en place sur un socle d'alimentation électrique (1).

## Claims

1. An electrical cooking appliance, in particular an electric deep fryer, comprising a housing (2), a drain base (8) in which a drain receptacle (80) is provided, the housing (2) being suitable for being put in place on the drain base (8), and, in the housing (2), a vessel (3) designed to receive a cooking bath, the vessel (3) being provided with a drain device (35) designed to empty the cooking bath into the drain receptacle (80), the drain device (35) being provided with a spring-loaded valve member (102) suitable for taking up a closed stable return position and an open position, the drain base (8) being provided with a bearing zone (87) designed to receive the housing (2), the drain base (8) being provided with a control member (84) designed to bring the spring-loaded valve member (102) into the open position when the housing (2) is in place on the drain base (8), the drain receptacle (80) having a bottom (81) and a top opening (89) extending above said bottom (81), said electrical cooking appliance being **characterized in that** the drain receptacle (80) is filled via the top opening (89), and **in that** the bearing zone (87) is disposed around the control member (84).

2. An electrical cooking appliance according to claim 1, **characterized in that** the drain device (35) is arranged facing the top opening (89) when the housing (2) is in place on the drain base (8).

3. An electrical cooking appliance according to claim 1 or claim 2, **characterized in that** the spring-loaded valve member (102) comprises a moving closure piece (103) mounted to move against a return spring (112) between a closed position and an open position, and **in that** the control member (84) is designed to move the moving closure piece (103) into the open position when the housing (2) is in place on the drain base (8).

4. An electrical cooking appliance according to any one of claims 1 to 3, **characterized in that** the top opening (89) is defined by the side wall (82) of the drain receptacle (80).

5. An electrical cooking appliance according to any one of claims 1 to 4, **characterized in that** the control member (84) is arranged above the drain receptacle (80).

6. An electrical cooking appliance according to any one of claims 1 to 5, **characterized in that** the control member (84) is provided on a support (85) integral with the bottom (81) of the drain receptacle (80).

7. An electrical cooking appliance according to claim 6, **characterized in that** the support (85), the control member (84), and the side wall (82) of the drain receptacle (80) are frustoconical.

8. An electrical cooking appliance according to any one of claims 1 to 7, **characterized in that** the drain receptacle (80) is suitable for being closed with a lid (9).

9. An electrical cooking appliance according to any one of claims 1 to 8, **characterized in that** the drain device (35) includes a filter (100) between the vessel (3) and the spring-loaded valve member (102).

10. An electrical cooking appliance according to any one of claims 1 to 9, **characterized in that** the drain device (35) includes a thermostatic valve member (101) between the vessel (3) and the spring-loaded valve member (102).

11. An electrical cooking appliance according to any one of claims 3 to 10, **characterized in that** the moving closure piece (103) is mounted to move in the direction in which the housing (3) is put in place on the drain base (8).

12. An electrical cooking appliance according to any one of claims 1 to 11, **characterized in that** the bearing zone (87) underlies a top annular wall (88).

13. An electrical cooking appliance according to claim 12, **characterized in that** the bearing zone (87) is surrounded by the top annular wall (88).

14. An electrical cooking appliance according to claim 12 or claim 13, **characterized in that** the top annular wall (88) forms means for centering the housing (2) on the drain base (8).

15. An electrical cooking appliance according to any one of claims 12 to 14, **characterized in that** the control member (84) is arranged lower than the top edge of the top annular wall (88).

16. An electrical cooking appliance according to any one claims 12 to 15, **characterized in that** the top annular wall (88) surrounds the top opening (89).

17. An electrical cooking appliance according to any one of claims 1 to 16, **characterized in that** the drain receptacle (80) is provided with an inspection side window (83).

18. An electrical cooking appliance according to any one of claims 1 to 17, **characterized in that** the housing (2) is provided with a handle (22).

19. An electrical cooking appliance according to any one of claims 1 to 18, **characterized in that** the housing (2) is suitable for being put in place on an electrical power supply base (1).

## Patentansprüche

1. Elektrisches Kochgerät, insbesondere elektrische Friteuse, mit einem Gehäuse (2), einem Entleerungssockel (8), in welchem ein Entleerungsbehälter (80) eingebracht ist, wobei das Gehäuse (2) auf den Entleerungssockel aufgesetzt werden kann, und einer im Gehäuse (2) angeordneten Wanne (3), die zur Aufnahme eines Garbads vorgesehen ist, wobei die Wanne (3) mit einer Entleerungsvorrichtung (35) zum Ausschütten des Garbads in den Entleerungsbehälter (80) vorgesehen ist, wobei die Entleerungsvorrichtung (35) ein federbelastetes Ventilelement (102) aufweist, das eine geschlossene stabile Rückstellposition und eine offene Position einnehmen kann, wobei der Entleerungssockel (8) einen Anlagebereich (87) aufweist, der zur Aufnahme des Gehäuses (2) vorgesehen ist, wobei der Entleerungssockel (8) ein Steuerelement (84) aufweist, das dazu vorgesehen ist, das federbelastete Ventilelement (102) in eine offene Position zu bringen, wenn das Gehäuse (2) auf dem Entleerungssockel (8) aufgesetzt ist, wobei der Entleerungsbehälter (80) einen Boden (81) und eine obere Öffnung (89) aufweist, die sich über dem Boden (81) erstreckt, **dadurch gekennzeichnet, dass** das Befüllen des Entleerungsbehälters (80) durch die obere Öffnung (89) erfolgt und dass der Anlagebereich (87) um das Steuerelement (84) herum angeordnet ist.

2. Elektrisches Kochgerät nach Anspruch 1, **dadurch gekennzeichnet, dass** die Entleerungsvorrichtung (35) gegenüber der oberen Öffnung (89) angeordnet ist, wenn das Gehäuse (2) auf dem Entleerungssockel (8) aufgesetzt ist.

3. Elektrisches Kochgerät nach einem der Ansprüche 1 oder 2, **dadurch gekennzeichnet, dass** das federbelastete Ventilelement (102) einen beweglichen Verschlussteil (103) aufweist, der gegen eine Rückstellfeder (112) zwischen einer geschlossenen und einer geöffneten Position beweglich angebracht ist, und dass das Steuerelement (84) zum Verlagern des beweglichen Verschlussteils (103) in die geöffnete Position vorgesehen ist, wenn das Gehäuse (2) auf dem Entleerungssockel (8) aufgesetzt ist.

4. Elektrisches Kochgerät nach einem der Ansprüche 1 bis 3, **dadurch gekennzeichnet, dass** die obere Öffnung (89) durch die Seitenwand (82) des Entleerungsbehälters (80) begrenzt ist.

5. Elektrisches Kochgerät nach einem der Ansprüche 1 bis 4, **dadurch gekennzeichnet, dass** das Steuerelement (84) oberhalb des Entleerungsbehälters (80) angeordnet ist.

6. Elektrisches Kochgerät nach einem der Ansprüche 1 bis 5, **dadurch gekennzeichnet, dass** das Steuerelement (84) auf einem Träger (85) ausgebildet ist, der aus dem Boden (81) des Entleerungsbehälters (80) hervorgeht.

7. Elektrisches Kochgerät nach Anspruch 6, **dadurch gekennzeichnet, dass** der Träger (85), das Steuerelement (84) und die Seitenwand (82) des Entleerungsbehälters (80) eine kegelstumpfartige Form aufweisen.

8. Elektrisches Kochgerät nach einem der Ansprüche 1 bis 7, **dadurch gekennzeichnet, dass** der Entleerungsbehälter (80) mit einem Deckel (9) geschlossen werden kann.

9. Elektrisches Kochgerät nach einem der Ansprüche 1 bis 8, **dadurch gekennzeichnet, dass** die Entleerungsvorrichtung (35) zwischen der Wanne (3) und dem federbelasteten Ventilelement (102) einen Filter (100) aufweist.

10. Elektrisches Kochgerät nach einem der Ansprüche 1 bis 9, **dadurch gekennzeichnet, dass** die Entleerungsvorrichtung (35) zwischen der Wanne (3) und dem federbelasteten Ventilelement (102) ein thermostatisches Ventilelement (101) aufweist.

11. Elektrisches Kochgerät nach einem der Ansprüche 3 bis 10, **dadurch gekennzeichnet, dass** der bewegliche Verschlussteil (103) entlang der Richtung zum Aufsetzen des Gehäuses (3) auf den Entleerungssockel (8) beweglich ist.

12. Elektrisches Kochgerät nach einem der Ansprüche 1 bis 11, **dadurch gekennzeichnet, dass** der Anlagebereich (87) von einer oberen ringförmigen Wand (88) überragt ist.

13. Elektrisches Kochgerät nach Anspruch 12, **dadurch gekennzeichnet, dass** der Anlagebereich (87) von der oberen ringförmigen Wand (88) umgeben ist.

14. Elektrisches Kochgerät nach einem der Ansprüche 12 oder 13, **dadurch gekennzeichnet, dass** die obere ringförmige Wand (88) ein Mittel zum Zentrieren des Gehäuses (2) auf dem Entleerungssockel (8) bildet.

15. Elektrisches Kochgerät nach einem der Ansprüche 12 bis 14, **dadurch gekennzeichnet, dass** das Steuerelement (84) weiter unten als der obere Rand der oberen ringförmigen Wand (88) angeordnet ist.

16. Elektrisches Kochgerät nach einem der Ansprüche 12 bis 15, **dadurch gekennzeichnet, dass** die obere ringförmige Wand (88) die obere Öffnung (89) umgibt.

17. Elektrisches Kochgerät nach einem der Ansprüche 1 bis 16, **dadurch gekennzeichnet, dass** der Entleerungsbehälter (80) ein seitliches Sichtfenster (83) aufweist.

18. Elektrisches Kochgerät nach einem der Ansprüche 1 bis 17, **dadurch gekennzeichnet, dass** das Gehäuses (2) einen Griff (22) aufweist.

19. Elektrisches Kochgerät nach einem der Ansprüche 1 bis 18, **dadurch gekennzeichnet, dass** das Gehäuse (2) auf einen Sockel zur elektrischen Versorgung (1) aufgesetzt werden kann.
